Europäisches Patentamt

European Patent Office

Office européen des brevets

(11) Publication number: **0 109 824**

**B1**

# (12) EUROPEAN PATENT SPECIFICATION

(45) Date of publication of patent specification: **11.07.90**

(21) Application number: **83306986.7**

(22) Date of filing: **15.11.83**

(60) Divisional application 86102167 filed on 19.02.86.

(51) Int. Cl.⁵: **H 01 B 1/24,** H 01 M 4/66, C 09 C 1/46, C 08 K 3/04

(54) Electrically conductive plastic complex material.

(30) Priority: **17.11.82 JP 200383/82**
**27.12.82 JP 227117/82**
**19.01.83 JP 5795/83**
**27.01.83 JP 10572/83**

(43) Date of publication of application:
**30.05.84 Bulletin 84/22**

(45) Publication of the grant of the patent:
**11.07.90 Bulletin 90/28**

(84) Designated Contracting States:
**AT DE GB SE**

(56) References cited:
EP-A-0 038 713      DE-A-2 834 390
EP-A-0 038 718      DE-A-2 923 245
CH-A- 554 589       JP-A-57 177 066
DE-A-2 524 640

Kirk-Othmer, Encyclopedia of Polymer Science
and Technology, 3rd. Edition, Volume 6, entry
"Ethylene Polymers"

(73) Proprietor: **Kabushiki Kaisha Meidensha**
**1-17, Ohsaki 2-chome**
**Shinagawa-ku Tokyo 141 (JP)**

(72) Inventor: **Yonahara, Kunio**
**2-25-401 Wakabadai Asahi-ku**
**Yokohama-shi Kanagawa-ken (JP)**
Inventor: **Miyogawa, Hiroshi**
**6-2-303 Namiki-2-chome Kanazawa-ku**
**Yokohama-shi Kanagawa-ken (JP)**
Inventor: **Aimoto, Shingo**
**4-1-3-942 Ojima**
**Koto-ku Tokyo (JP)**
Inventor: **Fushimi, Kazuo**
**6969-4 Shiba**
**Kawaguchi-shi Saitama-ken (JP)**
Inventor: **Tsunakawa, Hirokazu**
**418 Hideyasu Kisaimachi**
**Kita-Saitama-gun Saitama-ken (JP)**

(74) Representative: **Wood, Anthony Charles et al**
**Urquhart-Dykes & Lord 91 Wimpole Street**
**London W1M 8AH (GB)**

Courier Press, Leamington Spa, England.

**EP 0 109 824 B1**

(56) References cited:
PATENT ABSTRACTS OF JAPAN, unexamined applications, C-field, Vol. 7, No. 19, January 25, 1983

THE PATENT OFFICE JAPANESE GOVERNMENT (C-147)(1164), page 148 C 147

**Description**

This invention relates to an electrically conductive plastics material endowed with higher than a certain value of electrical conductivity without inclusion of metallic contents and more particularly to such electrically conductive plastics material suitable for in electrical, electronic or electrochemical devices, such as metal halogen batteries.

Recently, the use of an electrically conductive plastics material has become widespread, not only in electrical devices for domestic use, but as computer components.

These electrically conductive plastics materials are used as so-called molded pieces or synthetic resin paint, and are usually manufactured by dispersing fine powder of Ag, Cu, Al or the like metals, or fine carbon particles, into the synthetic resin.

Since the electrically conductive plastics materials are prepared by simply dispersing electrically conductive substances into the non-conductive plastics material, their electrical conductivity may fluctuate widely as a result of non-homogeneous dispersion of the conducting particles. In addition, it has not been possible to increase the electrical conductivity beyond a certain limit, although some electrically conductive materials containing dispersed metallic powders exhibit an electrical conductivity of the order of $10^4$ to $10^5$ S.cm$^{-1}$ (ohm$^{-1}$ cm$^{-1}$). The result is unavoidable limitations on the application of the electrically conductive plastics material.

Recently, it has been proposed to make use of certain dopants which may affect polyacetylene, polypyrrole or polyparaphenylene sulphide so as to make them electrically conductive. However, the resulting material tends to be unstable in physical properties and the apparatus for producing it is also complicated in structure.

In general, insulating materials such as plastics have volume resistivities higher than $10^8$ ohm-cm, semi-conductors such as Ge, Si. Carbon black and graphite have volume resistivities of $10^{-3}$ to $10^8$ ohm-cm, and conductors such as metals have volume resistivities of less than $10^{-3}$ ohm-cm.

DE—A—2524640 discloses an electrically conductive non-porous polyolefin composition comprising a homogeneous mixture of a propylene-ethylene copolymer containing 20 mol.% to 35 mol.% of ethylene and at least 30 parts by weight of finely divided conductive carbon per 100 parts by weight of copolymer. It is stated to be preferable for the carbon (e.g. carbon black) to be present in an amount of from 90 to 100 parts by weight per 100 parts by weight of copolymer. Part or all of the carbon black may be replaced by graphite. Suitable carbon blacks are said to be available under the Registered Trademark VULCAN eg VULCAN 3, VULCAN XXX and VULCAN XC-72. Blends of VULCAN XC-72 and PP—PE copolymer with an MFR of 6 are disclosed.

DE—A—2923245 discloses an electrically conductive ethylene-propylene polymer composition of which 5 to 20 wt %, preferably 10 to 15 wt %, is carbon black and 5 to 50 wt %, preferably 20 to 40 wt %, is graphite.

CH—A—554589 discloses an electrically conductive material of which 15 to 65 wt % is a thermoplastic polymer which is a polyolefine, cellulose polymer, homopolymer of vinyl chloride or vinyl acetate, polystyrene, acrylic polymer, methacrylic polymer or a polyamide, and from 35 to 85 wt % of a mixture of carbon black and graphite. This mixture contains between 40% and 80% of carbon black.

The problem solved by the present invention is how to improve electrical conductivity without loss of stability of physical properties.

According to the present invention, there is provided an electrically conductive plastics material made from a homogeneous mixture comprising a synthetic base resin material, an electrically conductive carbon black and a graphite, the synthetic base material being at least one material selected from a polyethylene with a density of more than 0.94 gm/cm$^3$, a polypropylene with a density of more than 0.90 gm/cm$^3$ and an ethylene-propylene copolymer with a density of more than 0.90 gm/cm$^3$, the synthetic base resin material being present in an amount of 30% to 70% by weight, and having a Melt Flow Rate of from 0.75 to 15 gm/10 min, the carbon black being present in an amount of 5% to 35% by weight and having a particle diameter of from 30 nm to 46 nm and a surface area of from 245 m$^2$/gm to 1000 m$^2$/gm; and characterised in that: the graphite comprises doped graphite present in an amount of from 15% to 65% by weight and having a particle diameter of no more than 74 µm (200 Tyler mesh).

In a preferred embodiment of the invention, the graphite has been pretreated with at least one dopant selected from bromine, iodine chloride, iodine bromide, sulphuric acid, nitric acid and arsenic fluoride (V).

As electrically conductive carbon black, various products resulting from incomplete combustion heat cracking of natural gas or liquid hydrocarbons may be used. The electrically conductive carbon blacks preferably have a volatile matter content of no more than from 1.0 to 1.5 weight percent, a pH of from 7.0 to 9.5 and DBP oil absorption of from 160 to 340 ml/100 gm.

It can be shown from the Examples below that the electrically conductive plastics material of the present invention comprises 30 to 70 weight percent, and preferably 45 to 65 weight percent of the component B, and 15 to 65 weight percent, preferably 15 to 50 weight percent of the component C, related to the total weight of the components. With an amount of component A lower in content than those specified above, the resulting material has lowered pliability and mechanical strength. With the content of component A higher than those specified above, it is not possible to realize sufficient electrical conductivity.

3

The electrically conductive plastics material of the aforementioned composition can be manufactured by using conventional forming apparatus, and is endowed with excellent formability and electrical conductivity without significantly lowering its mechanical strength.

The present invention is described below by referring to the Examples and the Comparative Examples.

The effects of the present invention obtained by these Examples are shown in Table 2.

The names and certain physical properties of synthetic base resin material (a), electrically conductive carbon black (B) and the graphite (C) used in the Examples and Comparative Examples are shown in the following Table 1.

TABLE 1.   Names and Properties of Components

| | | Commercial Name | Maker | Physical properties | | | | Ex. No. | Comp. Ex. No. |
|---|---|---|---|---|---|---|---|---|---|
| | | | | Density (g/cm³) | m.p (°C) | Softing point (°C) | MFR (g/10 min) | | |
| Poly-ethylene | A₁ | 5000 SF | Mitsui Sekiyu Kagaku K.K. | 0.959 | 132 | | 0.75 | 2-(2) | 1-(1), 1-(5) |
| | A₂ | FXO 860 | Showa Denko K.K. | 0.953 | | 129 | 0.8 | 2-(5) | 1-(4) |
| | A₃ | S6008 | " | 0.958 | | 129 | 0.8 | 2-(1) | |
| Polyprop-yrene | A₉ | MS230 | Tokuyama Soda K.K. | 0.91 | 150 | | 4 | 2-(3) 3, | 1-(2) 1-(6) |
| | A₁₀ | MS660 | " | 0.9 | 150 | | 15 | | 1-(3) |
| Ethyrene-propylen copolymer | A₁₁ | MS640 | " | 0.9 | 150 | | 6.5 | 2-(4) | |

Synthetic Resin Material (A)

EP 0 109 824 B1

TABLE 1.     (Continued)

| | | Commercial Name | Maker | Absorption (ml/100 g) | $N_2$ Surface Area $(m^2/g)$ | Ex. No. | Comp. Ex. No. |
|---|---|---|---|---|---|---|---|
| elec. cond. carbon black (B) | $B_1$ | CONDUXTEX -975 | Columbia Carbon K.K. | 160 | 270 | 2-(4) | 1-(1) |
| | $B_2$ | Ketchen Black EC | Lion Acso K.K. | 350 | 950 | 2-(1) 2-(2) 2-(5) 3 | 1-(2) 1-(4) |
| | $B_3$ | VULCAN XC -72 | Cabot | 166 | 272 | 2-(3) ° | 1-(3) 1-(6) |
| (C) Graphite — graphite | $C_1$ | #200 | Tokai Carbon K.K. | particle size | 200 mesh | 3 | 1-(1),(2), (3),(4),(5) |
| (C) Graphite — doped graphite | $C_{1-1}$ | " | " | bromine dopant liquid | | 2-(1) | |
| | $C_{1-2}$ | " | " | iodine acetone solution | | 2-(2) | |
| | $C_{1-3}$ | " | " | 3 mol iodine chloride/ 1 lit. methanol | | 2-(3) | |

EP 0 109 824 B1

TABLE 1.    (Continued)

| | | | Commercial Name | Maker | Physical Properties | Ex. No. | Comp. Ex. No. |
|---|---|---|---|---|---|---|---|
| graphite (C) | doped graphite | $C_{1-4}$ | #200 | Tokai Carbon k.k. | iodine bromide | 2-(4) | |
| | | $C_{1-5}$ | " | " | sulfuric acid | 2-(5) | |
| | | $C_{1-7}$ | " | " | arsenic fluoride (V) | 3 | |

EP 0 109 824 B1

### Comparative Examples 1-(1) to 1-(4)

The starting materials of the following composition were injected into a pressure kneader heated to 160°C and were kneaded for 15 minutes. The kneaded materials were formed by calender rolls to sheets 1 mm thick and the electrical conductivity as well as tensile strength of the resulting samples were measured. The results are shown in Table 3.

| Test No. | 1 - (1) | 1 - (2) | 1 - (3) | 1 - (4) |
|---|---|---|---|---|
| synth. resin mat. | $A_1$, 60wt.% | $A_9$, 65wt.% | $A_{10}$, 55wt.% | $A_2$, 50wt.% |
| Elec. cond. carbon black | $B_1$, 10wt.% | $B_2$, 5wt.% | $B_3$, 15wt.% | $B_2$, 5wt.% |
| graphite | $C_1$, 30wt.% | $C_1$, 30wt.% | $C_1$, 30wt.% | $C_1$, 45wt.% |

### Comparative Examples 1-(5) to 1-(6)

The materials of the composition shown below were kneaded as in the first Examples. The properties of the resulting samples are shown in Table 3.

| Test No. | 1 - (5) | 1 - (6) |
|---|---|---|
| synth. resin mat. | $A_1$, 50 wt. % | $A_9$, 90 wt. % |
| Elec. cond. carbon black | - | $B_3$, 10 wt. % |
| inorg. filler (graphite) | $C_1$, 50 wt. % | - |

### Example 2

A pressure kneader consisting of a ceramic mixer tank was set to 150°C and the starting materials consisting of polyolefin synthetic resin material (A), carbon black (B) and doped graphite (C) were kneaded under kneading conditions α, β and the kneaded materials were pressed by calender rolls into sheets each 1 mm thick. The properties of the resulting sheets as measured are shown in Table 3.

Doped samples were obtained by immersing powdered graphite $C_1$ in a dopant for 20 hours. Excess dopant was removed by allowing the graphite to stand for 4 to 5 hours in a draft at room temperature after the graphite was removed from the liquid. The α condition refers to kneading in which the components A and B are kneaded for 10 minutes, then the component C is added to the resulting kneaded product and the resulting product with additive C is kneaded for 2 minutes, and the β condition to kneading in which a mixture of the components A, B and C are kneaded together for 15 minutes. The dopants used are also shown in Table 2.

8

## TABLE 2

### Composition and Kneading Conditions
(the numerous weight percent)

| | Test No. | 2 - (1) | 2 - (2) | 2 - (3) | 2 - (4) | 2 - (5) |
|---|---|---|---|---|---|---|
| **Constituents** | Synth.resin mat. (A) | $A_3$, 60 | $A_1$, 50 | $A_9$, 50 | $A_{11}$, 50 | $A_2$, 60 |
| | Carbon black (B) | $B_2$, 10 | $B_2$, 10 | $B_3$, 30 | $B_1$, 30 | $B_2$, 10 |
| | Doped graphite(C) | $C_{1-1}$, 30 | $C_{1-2}$, 40 | $C_{1-3}$, 20 | $C_{1-4}$, 20 | $C_{1-5}$, 30 |
| dopants | | bromine liquid | iodine in acetone solution | iodine chloride 3 mol in methanol | iodine bromide (50°C) | sulfuric acid |
| knead. cond. | | $\alpha$ | $\beta$ | $\alpha$ | $\alpha$ | $\beta$ |

## Example 3

Powders of graphite $C_1$ were introduced in a stainless steel vessel, from which the air was evacuated. Arsenic fluoride (V) was introduced into the vessel to a pressure of 250 mm Hg. Doping was carried out at this pressure for 5 days. 30 wt. percent of polypropylene ($A_9$) and 5 wt. percent of carbon black ($B_2$) were introduced into the pressure kneader of the Example 3 and kneaded for 10 minutes. To the resulting kneaded product were added 65 wt. percent of the doped graphite $C_{1-7}$. The resulting mixture was kneaded for two minutes and prepared into a sheet 1 mm thick the properties of which were then measured. The results are also shown in Table 3.

**EP 0 109 824 B1**

## TABLE 3

### Properties of the Ultimate Plastic-Complex Materials

| | Sample Form | Electric Conductivity S.cm$^{-1}$ (ohm$^{-1}$ cm$^{-1}$) | Tensile Strength 9.81 MPa (kg/mm$^2$) |
|---|---|---|---|
| Comp. Ex. 1-(1) | sheet | 5 | 390 |
| 1-(2) | " | 6.5 | 450 |
| 1-(3) | " | 4 | 400 |
| 1-(4) | " | 6.5 | 460 |
| Comp. Ex. 1-(5) | sheet | $10^{-17}$ | 370 |
| 1-(6) | " | $5 \times 10^{-3}$ | 380 |
| Ex. 2-(1) | sheet | $5 \times 10^2$ | 360 |
| 2-(2) | " | $2 \times 10^2$ | 310 |
| 2-(3) | " | $9 \times 10^2$ | 350 |
| 2-(4) | " | $7 \times 10^2$ | 350 |
| 2-(5) | " | $5 \times 10^2$ | 330 |
| 3 | sheet | $2 \times 10^3$ | 290 |

It is seen from the results in the above Table 3 that the inventive material is significantly improved in electrical conductivity over the conventional material and its mechanial behaviour compares favourably therewith, owing to the use of doped graphite and carbon black simultaneously.

A related invention, namely, the replacement of at least a proportion of the grahite by active carbon, is described and claimed in EP—A—0190772, divided out of this application.

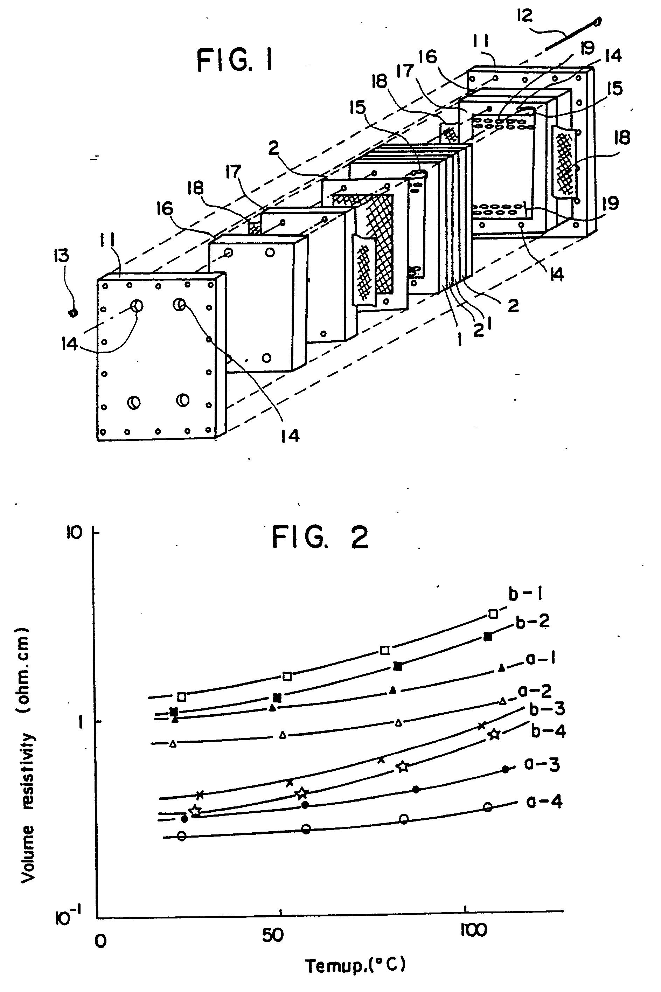

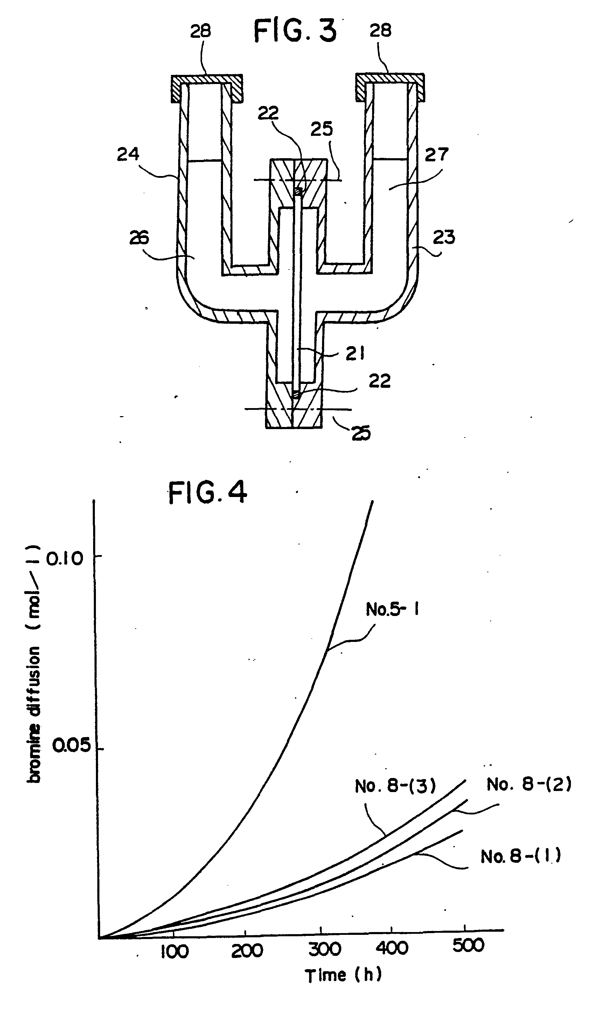

**Claims**

1. An electrically conductive plastics material made from a homogeneous mixture comprising a synthetic base resin material, an electrically conductive carbon black and a graphite, the synthetic base resin material being at least one material selected from a polyethylene with a density of more than 0.94 gm/cm$^3$, a polypropylene with a density of more than 0.90 gm/cm$^3$, and an ethylene-propylene copolymer with a density of more than gm/cm$^3$, the synthetic base resin material being present in an amount of 30% to 70% by weight and having a Melt Flow Rate of from 0.75 to 15 gm/10 min, the carbon black being present in an amount of 5% to 35% by weight and having a particle diameter of from 30 nm to 46 nm and a surface area of from 245 m$^2$/gm to 1000 m$^2$/gm; and characterised in that: the graphite comprises doped present in an amount of 15% to 65% by weight and has a particle diameter of no more than 74 μm (200 Tyler mesh).

2. A plastics material as claimed in claim 1 characterised in that the resin material is present in an amount of from 45 to 65 wt. %.

3. A plastics material as claimed in claim 1 or 2 characterised in that the graphite is present in an amount of from 15 to 50 wt. %.

4. A plastics material as claimed in claim 3 characterised by 30 wt. % graphite.

5. A plastics material as claimed in claim 4 characterised by from 5 to 15 wt. % carbon black.

6. A plastics material as claimed in claim 3 characterised by 5 wt. % carbon black and 45 wt. % graphite.

7. An electrically conductive plastics material according to claim 1, characterised in that the graphite has been pre-treated with at least one dopant selected from bromine, iodine, iodine chloride, iodine bromide, sulphuric acid, nitric acid and arsenic fluoride (V).

8. A plastics material as claimed in claim 7 characterised by 20 wt. % of doped graphite, 30 wt. % of carbon black and 50 wt. % of resin.

9. A plastics material as claimed in claim 7 characterised by 30 wt. % of doped grapite, 10 wt. % of carbon black and 60 wt. % of resin.

10. A plastics material as claimed in claim 7 characterised by 40 wt. % of doped graphite, 10 wt. % of carbon black and 50 wt. % of resin.

## Patentansprüche

1. Elektrisch leitendes Plastikmaterial, das aus einer homogen Mischung hergestellt wird, die ein synthetisches Grundharzmaterial, ein elektrisch leitendes Kohlenschwarz und Graphit enthält, das synthetische Grundharzmaterial mindestens ein Material, ausgewählt aus einem Polyäthylen mit einer Dichte von mehr als 0,94 gr/cm³, einem Polypropylen mit einer Dichte von mehr als 0,90 gr/cm³ und einem Äthylen-Propylen-Copolymer mit einer Dichte von mehr als 0,90 gr/cm³ enthält, wobei das synthetische Grundharzmaterial in einer Menge von 30 bis 70 Gew % vorhanden ist und eine Schmelzfließrate von 0,75 bis 15 gr/10 min aufweist, das Kohlenschwarz in einer Menge von 5 bis 35 Gew % vorhanden ist und einen Partikeldurchmesser von 30 nm bis 46 nm und eine Oberfläche von 245 m²/gr bis 1000 m²/gr hat, dadurch gekennzeichnet:

daß das Graphit dotiertes Graphit ist, das in einer Menge von 15 bis 65 Gew % vorhanden ist und einen Partikeldurchmessr von nicht mehr als 74 µm aufweist (200 Thyler-Raster).

2. Plastikmaterial nach Anspruch 1, dadurch gekennzeichnet, daß das Harzmaterial in einer Menge von 45 bis 65 Gew % vorhanden ist.

3. Plastikmaterial nach Anspruch 1 oder 2, dadurch gekennzeichnet, daß das Graphit in einer Menge von 15 bis 50 Gew % vorhanden ist.

4. Plastikmaterial nach Anspruch 3, gekennzeichnet durch 30 Gew % Graphit.

5. Plastikmaterial nach Anspruch 3, gekennzeichnet durch 5 Gew % Kohlenschwarz.

6. Plastikmaterial nach Anspruch 3, gekennzeichnet durch 5 Gew % Kohlenschwarz und 45 Gew % Graphit.

7. Elektrisch leitendes Plastikmaterial nach Anspruch 1, dadurch gekennzeichnet, daß das Graphit durch mindestens einen Dotierstoff vorbehandelt wurde, der aus Bromid, Jod, Jod-Chlorid, Jod-Bromid, Schwefelsäure, Salpetersäure und Arsenfluorid (V) ausgewählt ist.

8. Plastikmaterial nach Anspruch 7, gekennzeichnet durch 20 Gew % dotiertes Graphit, 30 Gew % Kohlenschwarz und 50 Gew % Harz.

9. Plastikmaterial nach Anspruch 7, gekennzeichnet durch 30 Gew % dotiertes Graphit, 10 Gew % Kohlenschwarz und 60 Gew % Harz.

10. Plastikmaterial nach Anspruch 7, gekennzeichnet durch 40 Gew % dotiertes Graphit 10 Gew % Kohlenschwarz und 50 Gew % Harz.

## Revendications

1. Matière plastique conductricé electriquement fabriquée à partir d'un mélange homogène comprenant une matière synthétique à base de résine, un noir de carbone conducteur électriquement et un graphite, la matière synthétique à base de résine étant au moins un matière choisie parmi un polyéthylène ayant une densité supérieure à 0,94 g/cm³, un polypropylène ayant une densité supérieure à 0,90 g/cm³ et un copolymère d'éthylène/propylène ayant une densité supérieure à 0,90 g/cm³, la matière synthétique à base de résine étant présente en une quantité de 30 à 70% en poids et ayant une vitesse d'écoulement à l'état fondu de 0,75 à 15 g/10 min, lenoir de carbone étant présent en une quantité de 5 à 35% en poids et ayant un diamètre particulaire de 30 nm à 46 nm et une surface spécifique de 245 m²/g à 1000 m²/g; et caractérisée en ce que le graphite comprend du graphite dopé présent en une quantité de 15 à 65% en poids et possède un diamètre particulaire inférieur ou égal à 74 µm (200 mesh Tyler).

2. Matière plastique selon la revendication 1, caractérisée en ce que la matière à base de résine est présente en une quantité de 45 à 65% en poids.

3. Matière plastique selon la revendication 1 ou 2, caractérisée en ce que le graphite est présent en une quantité de 15 à 50% en poids.

4. Matière plastique selon la revendication 3, caractérisée par une teneur de 30% en poids de graphite.

5. Matière plastique selon la revendication 4, caractérisée par une teneur de 5 à 15% en poids de noir de carbone.

6. Matière plastique selon la revendication 3, caractérisée par une teneur de 5% en poids de noir de carbone et 45% en poids de graphite.

7. Matière plastique conductrice électriquement selon la revendication 1, caractérisée en ce que le graphite a été prétraité avec au moins un dopant choisi parmi le brome, l'iode, le chlorure d'iode, le bromure d'iode, l'acide sulfurique, l'acide nitrique et le fluorure d'arsenic (V).

8. Matière plastique selon la revendication 7, caractérisée par une teneur de 20% en poids de graphite dopé, 30% en poids de noir de carbone et 50% en poids de résine.

9. Matière plastique selon la revendication 7, caractérisée par une teneur de 30% en poids de graphite dopé, 10% en poids de noir de cabone et 60% en poids de résine.

10. Matière plastique selon la revendication 7, caractérisée par une teneur de 40% en poids de graphite dopé, 10% en poids de noir de carbone et 50% en poids de résine.

# FIG. 1

# FIG. 2

Volume resistivity (ohm·cm)

Temup.(°C)

b-1
b-2
a-1
a-2
b-3
b-4
a-3
a-4

## FIG. 3

## FIG. 4

2